# FASCICULE DE BREVET EUROPEEN

(11) **EP 4 216 128 B1**
(45) Date de publication et mention de la délivrance du brevet: **11.06.2025**
(21) Numéro de dépôt: 23155028.6
(22) Date de dépôt: 14.12.2018
(51) Int. Cl.: G06Q 20/20, G06Q 20/32, G07G 1/00, G07G 3/00, G07F 7/08, G07F 7/02, G06Q 10/087, G06Q 30/0201, G06Q 30/0601

(54) **PLATEFORME CENTRALISEE POUR LA CONDUITE DE TRANSACTIONS COMMERCIALES GRACE A UN RESEAU DE COMMUNICATION EN CHAMP PROCHE**
ZENTRALISIERTE PLATTFORM ZUR DURCHFÜHRUNG VON GESCHÄFTSTRANSAKTIONEN MIT EINEM NAHFELDKOMMUNIKATIONSNETZWERK
CENTRALIZED PLATFORM FOR CONDUCTING COMMERCIAL TRANSACTIONS USING A NEAR FIELD COMMUNICATION NETWORK

(30) Priorité: 21.12.2017 FR 1762738
(43) Date de publication de la demande: 26.07.2023
(62) Demande divisionnaire de: 18212630.0
(73) Titulaire: Worldline, 95870 Bezons (FR)
(72) Inventeur: DECOSTER, Julien, 59710 AVELIN (FR); HERAULT, Colombe, 59135 WALLERS (FR); LEFEBVRE, Guillaume, 62410 MEURCHIN (FR); LY, Céline, 59800 LILLE (FR)
(74) Mandataire: Novagraaf Technologies

(56) Documents cités:
- EP-A1- 1 942 474
- FR-A1- 2 736 177
- FR-A1- 2 783 988
- GB-A- 2 344 671
- US-A- 6 105 004
- AUGUST C P: "AUTOMATED RETAILING SYSTEM", IBM TECHNICAL DISCLOSURE BULLETIN, INTERNATIONAL BUSINESS MACHINES CORP. (THORNWOOD), US, vol. 17, no. 9, 1 February 1975 (1975-02-01), pages 2605, XP000944944, ISSN: 0018-8689

## Description

### DOMAINE DE L'INVENTION

L'invention concerne le domaine de la conduite de transactions commerciales consistant à sélectionner des produits dans des rayonnages avant de procéder au paiement des produits sélectionnées. L'invention s'applique particulièrement aux achats dans des surfaces commerciales telles que des supermarchés.

### CONTEXTE DE L'INVENTION

De nombreuses solutions ont été élaborées pour faciliter les transactions, notamment les achats, dans des surfaces commerciales telles que des supermarchés.

Une première solution, très répandue, consiste à disposer sur les produits eux-mêmes des étiquettes. Pour effectuer l'acte d'achat, le client se présente face à une borne, ou caisse, dédiée, afin que les étiquettes soient lues. En déterminant les informations contenues dans les étiquettes, la borne peut élaborer un panier virtuel pour le client contenant l'ensemble des produits dont les étiquettes ont été lues. Une fois l'ensemble des étiquettes lues, le client peut procéder au paiement, en général au moyen d'un terminal de paiement (ou « PoS » pour « *Point of Sale »* en anglais) associé à la borne.

Les étiquettes sont typiquement des étiquettes visuelles comportant un code barre, un QR code, ou autres systèmes optiques permettant d'encoder de l'information de façon lisible automatiquement par un ordinateur. Toutefois d'autres types d'étiquettes sont également possibles, notamment des étiquettes (ou badges) radios de type RFID notamment (pour *« Radio Frequency Identification »).*

Une telle solution souffre toutefois de nombreux inconvénients. Ainsi, elle nécessite de placer des étiquettes sur chacun des produits mis en vente, ce qui représente un coût du fait d'une part du coût propre de l'étiquette, notamment dans le cas d'une étiquette, ou badge, radio, et d'autre part de la manutention nécessaire pour accoler les étiquettes sur chaque produit.

En outre, dans le cas d'étiquettes optiques, la phase de lecture de chaque étiquette par la borne peut être très longue dès lors que le nombre de produits à acheter est important, et sujette à erreurs. Elle nécessite notamment de manipuler le produit pour trouver l'étiquette optique et la placer devant le lecteur.

Une autre solution proposée récemment consiste à disposer des badges (ou étiquettes) de communication en champs proche sur les emplacements des rayonnages pour chaque type de produit mis en vente. Ces badges peuvent par exemple être des badges (ou *« tag* ») NFC (pour *« Near Field Communication »).*

Le client dispose d'un lecteur de communication en champ proche (NFC...) qui lui permet de lire le contenu des étiquettes en le disposant à proximité de celles-ci. Ce lecteur peut être embarqué sur un dispositif mobile spécifique ou un terminal mobile de télécommunication (« smartphone », tablette, etc.)

Les badges contiennent des identifiants des produits, de sorte qu'en lisant l'ensemble des étiquettes associées aux produits à acheter, le terminal mobile peut créer le panier virtuel constitué de l'ensemble des produits dont l'identifiant a été lu et qui sont donc à acheter. Il peut alors procéder au paiement, par exemple directement depuis son terminal de communication en utilisant des mécanismes de paiement existants, ou en caisse.

Une telle solution nécessite donc l'utilisation d'un terminal de communication équipé d'un lecteur NFC.

Il nécessite en outre que le client ait constamment son terminal personnel dans la main, ce qui peut engendrer des risques de vol, de chute, ou de perte, ou en tout cas un frein à l'utilisation de la solution. Une alternative consiste à mettre à disposition des « scannettes » aux clients, ce qui engendre un surcoût important pour le magasin.

Une autre approche a été proposée dans le brevet US9473747, basée sur l'identification et le suivi des clients d'un magasin à partir, notamment, d'images vidéo et de techniques de reconnaissances faciales, et d'autres capteurs. Une telle approche nécessite d'une part que les clients aient préalablement souscrit au service (compte « amazon »...), et d'autre part le déploiement d'une infrastructure matérielle et logicielle importante au sein du magasin (capteurs, caméras...). D'autres solutions pour faciliter les transactions dans des surfaces commerciales telles que des supermarchés sont connues des documents EP 1 942 474 A1, XP000944944, FR 2 736 177 A1, FR 2 783 988 A1, US 6 105 004 A, et GB 2 344 671 A.

### RESUME DE L'INVENTION

Le but de la présente invention est de fournir une solution palliant au moins partiellement les inconvénients précités.

A cette fin, la présente invention propose le procédé selon la revendication 1.

Un autre objet de l'invention concerne un système selon la revendication 2.

Suivant des modes de réalisation préférés, l'invention comprend une ou plusieurs des caractéristiques suivantes qui peuvent être utilisées séparément ou en combinaison partielle entre elles ou en combinaison totale entre elles :
- le système comporte en outre une borne associé à ladite surface géographique mettant en œuvre ladite interface homme-machine, et un lecteur radio pour, lors d'une lecture dudit badge, déclencher la présentation dudit panier virtuel. :
- la borne comporte un terminal de paiement adapté pour effectuer le paiement des produits identifiés dans ledit panier virtuel ;
- les messages sont transmis via un réseau de radiocommunication ;
- lesdits lecteurs et ledit badge sont conformes aux normes de communication en champs proche, NFC ;
- ledit message est conforme au protocole MQTT ;
- la plateforme est prévue pour constituer des statistiques à partir des informations obtenues par lesdits messages, représentatives du comportement desdits clients.

L'invention permet ainsi un gain de temps pour les clients, par la mise à disposition d'un système simple, rapide et autonome (sans nécessité d'interaction avec un personnel de caisse). En outre, elle ne nécessite pas d'objets supplémentaires pour le client (carte, badge...), si celui-ci dispose déjà d'une carte ou badge NFC permettant de l'identifier.

Pour le commerçant, l'invention permet une numérisation totale du parcours client, ce qui permet de minimiser les frais de gestion et d'accroître la connaissance de ses clients. Elle ne nécessite pas non plus d'installation d'équipements coûteux ou atypiques, mais uniquement des équipements standards.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 illustre un mode de réalisation schématique et haut-niveau de l'invention.
Les figures 2a, 2b, 2c, 2d représentent 4 mises en œuvres concrètes de certains aspects de l'invention.

### DESCRIPTION DETAILLEE DE L'INVENTION

L'invention s'applique particulièrement au contexte d'une surface géographique délimitée comme un point de vente en libre-service. Il peut s'agir de surface de la taille d'un supermarché, ou d'une supérette, ou même d'un hypermarché.

Dans une telle surface commerciale, les produits sont typiquement disposés sur des rayonnages et classés par types. En regard de chaque produit, on dispose une étiquette affichant des informations sur le produit vendu : dénomination, prix, numéros de référence, éventuellement un prix au kilo, etc.

Selon la définition classique du domaine, un produit correspond à chacune des références catalogue ou des propositions commerciales standard commercialisées par une entreprise. De la sorte, un produit peut éventuellement être un produit tangible, mais aussi un forfait, une prestation de service, un abonnement, une application, etc.

Il est également à noter que selon cette définition, un client achète un (ou plusieurs) exemplaire(s) d'un produit. Par exemple, il peut acheter un lot de trois « cookies », ou 1 exemplaire d'un produit « bouteille d'eau », les produits « cookie » et « bouteille d'eau » étant en outre particularisés par un type, un prix, une marque, etc.

Selon un abus de langage permettant de simplifier l'exposé, on comprendra que l'expression « achat d'un produit » doit donc être comprise comme équivalente à l'achat d'un exemplaire d'un produit.

En outre, la description se focalise sur l'acte d'achat, mais l'invention, dans sa généralité, peut couvrir d'autres types de transaction : location, éventuellement emprunt dans une bibliothèque, etc.

Selon l'invention, on dispose en outre une pluralité de lecteurs radio, chacun associé à un produit particulier (c'est-à-dire, donc, une référence du catalogue du magasin).

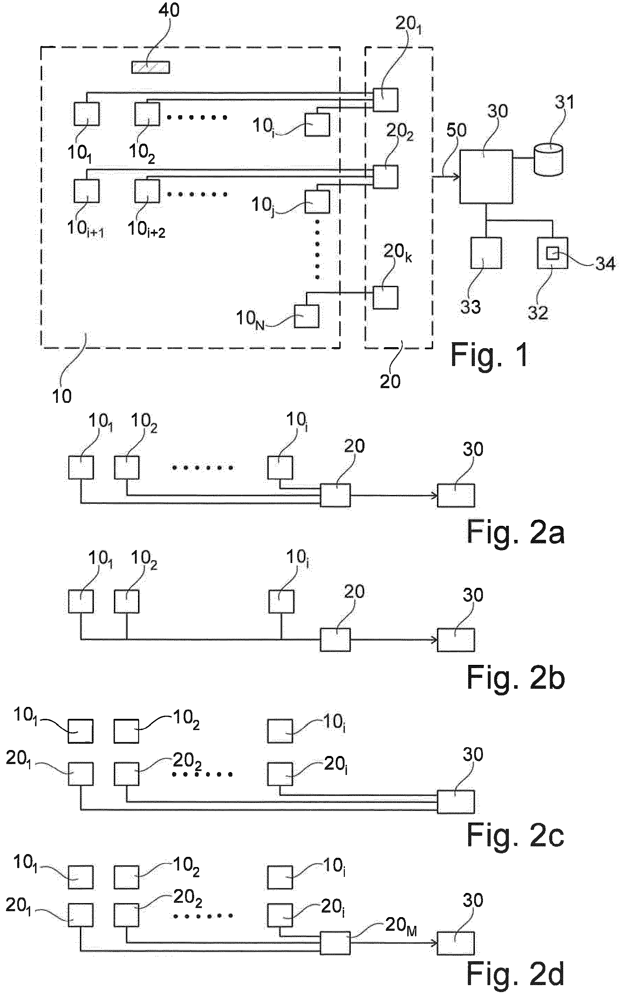

La figure 1 illustre un mode de réalisation schématique et haut-niveau de l'invention.

Les lecteurs radio 10₁, 10₂...10ᵢ, 10ᵢ₊₁, 10ᵢ₊₂...10ⱼ...10_{N} sont organisés en groupes qui peuvent correspondre à des rayons de la surface commerciale. L'invention peut s'appliquer toutefois quelque soit le nombre de groupes, y compris dans le cas d'un groupe unique. Comme on le verra ultérieurement, cette notion de groupe n'a d'impact que sur les architectures matérielles permettant de mettre en œuvre l'invention, mais n'a pas d'impact sur le niveau fonctionnel de plus haut niveau.

Chaque lecteur peut être associé à un produit, à côté duquel il est physiquement disposé. Concrètement, il peut être situé à côté, ou derrière une étiquette physique associée au produit afin d'être facilement localisable et visible par les clients.

Le client souhaitant acquérir (acheter, par exemple) un produit approche un badge radio 40 (ou « radio-étiquette ») du lecteur correspondant au produit en question, afin de permettre la mise en communication du lecteur et du badge.

Typiquement, une technologie de type « Communication en champ proche » peut être mise en œuvre, selon laquelle le lecteur radio est un lecteur NFC ou une antenne d'un lecteur NFC.

La communication en champ proche (CCP) ou NFC, pour « Near Field Communication », une technologie de communication sans fil à courte portée et à haute fréquence, permettant l'échange d'informations entre des périphériques jusqu'à une distance d'environ 10 cm dans le cas général. Cette technologie est une extension de la norme ISO/CEI 14443 standardisant les cartes de proximité utilisant la radio-identification (RFID).

Il est à noter que si la technologie NFC est connue dans son utilisation pour des transactions commerciales dans une surface commerciale, l'invention propose, notamment, de renverser les utilisations du lecteur et du badge. En effet, selon l'invention, le client dispose d'un badge NFC alors que les lecteurs sont associés aux produits, contrairement à l'état de la technique.

Le badge radio peut être personnel, c'est-à-dire attribuée et correspondre à un client particulier. Il peut s'agir par exemple d'une carte de crédit disposant d'une telle radio-étiquette (carte de crédit « sans contact »), mais également d'une carte de fidélité ou de toute autre carte ou dispositif remis par la surface commerciale à ses clients et pouvant permettre de les identifier. D'autres types de cartes peuvent être utilisés, notamment des cartes indépendantes de la surface commerciale : cartes de transports en commun, cartes de bibliothèque, etc., du moment qu'elles puissent identifier un client de façon unique.

Cette identification peut être valable le temps d'une session, c'est-à-dire pendant la durée que le client est dans la surface commerciale, de sorte qu'à un moment donné, il peut n'exister qu'un unique client correspondant à un identificateur de carte radio donné.

Mais cette identification peut également être valable sur une plus longue durée (comme par exemple avec une carte de crédit ou une carte de fidélité...), pouvant permettre à la surface commerciale et au client d'établir un profil client rémanent d'une visite à l'autre dans la surface commerciale (ou dans une autre surface commerciale de la même enseigne, dans le cas d'une chaîne commerciale).

Lorsque le badge 40 est située à proximité suffisante d'un lecteur radio (10₂ dans l'exemple de la figure 1), celui-ci peut d'une part détecter sa présence et d'autre part procéder à la lecture de son contenu, en recevant et analysant l'onde radio modifiée par le circuit passif du badge, ou radio-étiquette.

Selon l'invention, ce contenu contient un identifiant associé au badge. Cet identifiant, typiquement, identifie le client porteur du badge, mais d'autres arrangements sont également possibles (identifiant collectif pour plusieurs clients, etc.)

Des moyens 20 sont prévus pour, à la lecture d'un badge, déclencher la transmission d'un message 50 destiné à une plateforme centralisée 30 qui est associée à la surface commerciale.

Ces moyens peuvent comporter plusieurs modules. Ces modules peuvent mettre en œuvre des fonctions distinctes (mise en forme du message, établissement/contrôle de la liaison entre les lecteurs et la plateforme, etc.), et peuvent aussi être associés chacun à des groupes de lecteurs.

Dans l'exemple de la figure 1, des modules 20₁, 20₂...20ₖ sont associés respectivement à k groupes de lecteurs, correspondant à k rayons dans le magasin, 10₁, 10₂...10ᵢ (pour le module 20₁), 10ᵢ₊₁, 10ᵢ₊₂...10ⱼ pour le module 10₂),...10_{N} (pour le module 10ₖ).

Bien évidemment, d'autres arrangements sont possibles dans le cadre de l'invention.

Les moyens 20 peuvent être prévus pour effectuer un contrôle des lecteurs NFC et un traitement des informations reçues de ces lecteurs NFC. Par exemple, il peut être prévu de filtrer les doubles lectures : en effet, le client peut manipuler son badge radio de sorte que celui-ci soit lu deux fois (ou plus) par le lecteur. Une double lecture due à une mauvaise manipulation doit être écartée et un seul message 50 doit être transmis à la plateforme centralisée.

Les moyens 20 peuvent aussi distinguer cette situation de celle où le client souhaite effectivement valider deux fois le même produit (par exemple, s'il souhaite acheter deux exemplaires d'un même produit). La distinction entre ces deux situations peut être effectuée sur la base d'un délai entre deux lectures du même badge par un même lecteur.

Les moyens 20 peuvent être prévus pour transmettre un acquittement au client, lorsque la lecture a été correctement effectuée. Cet acquittement peut être visuel et/ou audio, au niveau de l'étiquette.

Si le badge présenté n'est pas compatible ou ne peut pas être lu pour une raison quelconque, l'absence d'acquittement permet au client de comprendre que son achat (ou location...) n'a pas été validé et de réagir. Il est également possible de transmettre un signal visuel et/ou audio différent de celui de l'acquittement.

Les moyens 20 sont également prévus pour mettre en forme un message 50 adapté à la transmission vers la plateforme centralisée 30. Ils permettent donc l'interfaçage avec le réseau de communication permettant la liaison avec cette plateforme, et également la constitution du message à partir des informations lues par les lecteurs NFC, et d'éventuelles informations déterminées localement, selon le protocole mis en place.

Le message 50 peut être transmis à la plateforme centralisée 30 via différents moyens. Un réseau filaire peut être mis en place (Ethernet...), de même qu'un réseau sans fil (WiFi...). Le choix d'une technologie peut notamment être dicté par la taille et l'agencement de la surface commerciale. Les moyens 20 sont alors adaptés pour établir et maintenir une liaison réseau entre eux et la plateforme centralisée.

Selon un mode de réalisation de l'invention, le message 50 peut être transmis conformément au protocole MQTT (pour « *MQ Telemetry Transport* »)*.* Ce protocole est intéressant car optimisé pour minimiser la taille des messages et échanges. Il est en outre bidirectionnel et simple à implémenter.

Toutefois, d'autres protocoles sont également possibles pour mettre en œuvre l'invention et transmettre le message 50 : HTTP, HTTPS, des sockets IP ou web, etc.

Ce message 50 contient au moins un identifiant du badge 40, qui a été lu par un lecteur 10₁... 10_{N}, ainsi qu'un identifiant du lecteur qui a effectué cette lecture. Autrement dit, le message contient une association entre deux identifiants qui représentent un couple lecteur/ badge formé par une mise en communication temporaire, lorsqu'un client présente son badge au lecteur associé à un produit désiré.

Selon un mode de réalisation de l'invention, le message 50 peut également transmettre un horodatage.

Selon un mode de réalisation de l'invention, le message 50 peut également contenir un identifiant du magasin. Il est alors possible de pouvoir gérer plusieurs magasins via une même plateforme centralisée.

Le message 50 est reçu alors par la plateforme centralisée 30.

On entend ici par « centralisée » le fait qu'elle couvre fonctionnellement l'ensemble de la surface géographique concernée par le mécanisme mis en place selon l'invention. Elle peut notamment couvrir l'ensemble d'une supérette, d'un supermarché, d'un hypermarché, etc., de sorte qu'un client soit traité par la même plateforme tout au long de son parcours dans la surface.

Selon un mode de réalisation, la plateforme peut même couvrir plusieurs magasins physiquement distincts (et donc localisés à des emplacements géographiques différents).

Toutefois, l'implémentation peut ne pas être « centralisée », mais au contraire réparti sur un ensemble de serveurs, notamment dans des buts de répartition de charge et/ou de redondance.

Egalement, cette plateforme peut être mise en œuvre de sorte à gérer un ensemble de surfaces commerciales, par exemple dans le cas d'une chaîne de magasins, de sorte qu'un même client puisse être reconnu dans l'ensemble des magasins.

La plateforme centralisée 30 peut alors mémoriser un panier virtuel contenant cette association entre identifiants d'un produit (c'est-à-dire d'un lecteur radio) et d'un client (c'est-à-dire d'un badge radio).

Dans l'exemple illustré, ce panier virtuel est mémorisé dans une base de données 31, mais d'autres mises en œuvre sont possibles. Notamment, il peut être mémorisé au sein d'une plateforme en nuage (ou « cloud »).

Au fur et à mesure du parcours du client dans la surface, des nouveaux messages 50 seront transmis à partir de lecteurs radios d'autres produits mais associés à ce même client. Le panier virtuel est alors mis à jour, de sorte qu'à un même identifiant de badge ou de client est associée une pluralité d'identifiants de produits, ou de lecteurs radio.

La plateforme 30 permet également de présenter ce panier virtuel au client, au moyen d'une interface homme machine.

Cette interface homme machine peut être mise en œuvre par un terminal mobile de télécommunication 33. Le client peut, au moyen de son propre terminal de télécommunication (téléphone mobile, smartphone, tablette, objet connecté...) visualiser son panier virtuel afin, notamment, de vérifier son contenu et le cas échéant, éventuellement, le modifier (supprimer un produit, modifier une quantité ou nombre d'exemplaires d'un produit, etc.).

Cette interface homme machine peut également être mise en œuvre par la borne 32 associée à la surface géographique (superette, supermarché, hypermarché...). Cette borne, ou caisse, dispose d'un écran sur lequel le panier peut être affiché, après que le client se soit identifié auprès de la borne. L'identification peut s'effectuer par tout moyen, y compris au moyen de son badge radio qu'il présente à un lecteur radio associé à la borne.

Ces deux interfaces peuvent être complémentaires : au sein d'une même surface, les clients peuvent choisir entre l'accès à leur panier virtuel via une borne 32, ou via leur terminal mobile de télécommunication 33.

Dans le cadre d'une transaction commerciale, celle-ci peut donner lieu à une transaction financière (achat, location...), qui peut se matérialiser également par cette interface homme machine.

La transaction financière, et en particulier le paiement des produits identifiés dans le panier virtuel, peut également être mis en œuvre par le terminal mobile de télécommunication 33 et/ou par une borne 32.

Selon un premier mode de réalisation, le paiement peut se faire par le client via le terminal mobile de communication 33, après qu'il a visualisé le panier virtuel. Le client peut effectuer l'ensemble des opérations de visualisation du panier (pour en valider le contenu) et de paiement avec son terminal mobile de communication, sans utilisation d'une borne, ou même d'un terminal de paiement (POS pour « Point of Sale »).

Selon un deuxième mode de réalisation, le client visualise son panier virtuel sur une borne 32, et utilise son terminal mobile de communication comme moyen de paiement.

Dans ces deux modes de réalisation, différents mécanismes ont été proposés et sont donc disponibles pour permettre le paiement par téléphone mobile. On peut notamment citer le service « mobile Wallet » ou le « wallet marchand » de Wordline, ou, « Google Wallet ».

Le paiement peut se faire avec saisie d'un code secret « PIN », mais d'autres mécanismes sont également envisageables (prélèvement bancaire...).

Selon un troisième mode de réalisation, la borne 32 comporte un terminal de paiement 34, adapté pour effectuer le paiement des produits identifiés dans le panier virtuel. Le client peut visualiser le contenu du panier virtuel sur l'interface homme machine mise en œuvre par la borne afin de la valider, comme dans le mode de réalisation précédent, puis procéder au paiement par le terminal de paiement 34 intégré au sein de la borne, en utilisant par exemple une carte de crédit, une carte prépayée ou de l'argent liquide.

D'autres types de transactions et cas d'usage des principes de l'invention sont également possibles.

A titre d'exemple, on peut citer un mécanisme d'abonnement : le client s'abonne auprès de la surface pour certains produits (par exemple, une formule repas comportant un sandwich, et une boisson). Conformément à cet abonnement, le client est débité qu'il prenne ou pas les produits.

Lors du passage dans le magasin, il s'agit donc de vérifier qu'il se conforme à son abonnement.

Dans cet exemple d'application, le magasin pourrait n'équiper de lecteurs radios que les produits pouvant entrer dans ces formules d'abonnements.

D'autres mécanismes sont encore possible, tel une autre forme d'abonnement selon lequel le client autorise un débit maximum par période (mois...) ou par passage en caisse, et/ou un nombre maximum de passages en caisse. Tant que ces limites ne sont pas atteinte, le client n'a pas besoin de valider ou confirmer ses achats auprès d'un quelconque terminal, après la validation des produis en magasin via la lecture par NFC.

Un autre exemple est de permettre la fourniture d'une preuve d'achat : après avoir finalisé l'achat des produits, le client reçoit une preuve d'achat, par exemple sous la forme d'un QR code, qui peut être numérique ou sous une forme imprimée). Cette preuve d'achat peut alors être utilisée pour le montrer à un vigile, ou pour être scannée avec un lecteur (pour ouverture automatique de porte, etc.)

Les figures 2a, 2b, 2c, 2d représentent 4 mises en œuvres concrètes de certains aspects de l'invention.

Sur la figure 2a, les lecteurs radios 10₁, 10₂...10ᵢ sont mis en œuvre par des lecteurs de communication en champs proche, NFC. Ils sont connectés à un dispositif de traitement d' information 20, qui peut par exemple être un nano-ordinateur de type « Raspberry Pi » ou équivalent.

Le dispositif 20 peut alimenter les lecteurs NFC, et communiquer avec eux via un réseau filaire. Il dispose également d'une interface lui permettant de communiquer avec la plateforme centralisée 30, soit via un réseau de communication filaire, soit via un réseau de communication sans fil, WiFi ou autre.

Sur la figure 2b, les lecteurs radios 10₁, 10₂...10ᵢ sont des antennes d'un même lecteur NFC, qui peut être incorporé dans les moyens 20. Ces moyens 20 peuvent en outre comprendre une interface vers la plateforme centralisée 30. Cette solution présente l'avantage de ne multiplier que l'antenne par le nombre i de produits présentés. Les circuits du lecteur NFC sont mutualisés pour l'ensemble.

Selon un mode de réalisation, il est possible de disposer d'un lecteur NFC multi-antennes.

Selon un autre mode de réalisation, le lecteur NFC est mono-antenne, et l'on dispose entre ce lecteur et les antennes un commutateur d'antennes commandé par un signal issue de capteurs de proximité disposés en regard des étiquettes. Ainsi, lorsque le client dispose le produit en face de l'étiquette, le capteur de proximité correspondant commande le commutateur d'antennes afin que le lecteur NFC lise le signal radio sur l'antenne correspondante.

Ce second mode de réalisation présente l'avantage de ne nécessiter que des dispositifs standards (lecteur NFC mono-antenne). En outre, il permet de limiter la consommation énergétique puisque les antennes peuvent n'être alimentées qu'au moment de la lecture (via la commutation), et que la consommation d'une antenne est bien plus importante que celle d'un capteur de proximité.

Enfin, il permet d'éviter qu'un badge soit lu par un lecteur qui serait très proche du lecteur visé par le client : en effet, dans ce mode de réalisation, une unique antenne est activée, la plus proche du produit présenté par le client, ce qui évite ces effets de bord.

Dans l'exemple de la figure 2c, les lecteurs radio sont mis en œuvre par des lecteurs de communication en champs proche, NFC. Chacun d'entre eux est connecté à un module, respectivement 20₁, 20₂...20ᵢ des moyens 20. Chacun de ces modules est autonome et peut communiquer avec la plateforme centralisée 30 via un réseau de communication filaire ou sans-fil.

Dans l'exemple de la figure 2d, les lecteurs radio sont mis en œuvre par des lecteurs de communication en champs proche, NFC. Comme précédemment, chacun d'entre eux est connecté à un module, respectivement 20₁, 20₂...20ᵢ des moyens 20. Ces modules sont prévus pour contrôler les lecteurs NFC. Ils sont connectés à un module « maître », 20_{M} qui met en œuvre l'interface avec la plateforme centralisée 30. Par rapport à la mise en œuvre de la figure 2a, la communication entre les lecteurs NFC et le module 20/20_{M} est grandement facilitée par la présence des modules « locaux » 20₁, 20₂...20ᵢ: en effet, dans la solution de la figure 2a, 5 ou 6 fils de pilotage sont nécessaires, tandis qu'un unique fil peut être déployé dans le cas de la solution de la figure 2d, ce qui facilite évidemment le déploiement et la maintenance dans une surface commerciale.

Un des avantages de l'invention est que l'ensemble du processus d'achat (ou location, emprunt..) du client est géré par la plateforme centralisée. Celle-ci permet ainsi d'acquérir des informations d'une part sur le client lui-même, mais aussi sur leur comportement au sein de la zone géographique.

Ainsi, elle permet de créer des profils pour les clients, ce qui permet d'améliorer les relations commerciales entre le gérant de la surface et ses clients (opérations de fidélisation, etc.).

Elle permet également de créer des statistiques sur le comportement des clients, constitués à partir des informations obtenues par les messages reçus : temps moyen entre la première sélection d'un produit et le paiement, etc.

Elle permet également la synchronisation en temps-réel de tous les clients, de tous les paniers virtuels pour tous les terminaux (bornes ou terminaux mobiles des clients).

En outre, elle permet aux clients de pouvoir constituer leur panier virtuel d'une façon très simple et ergonomique. Ils peuvent utiliser une simple carte, fournie par la surface commerciale, qui comporte un identifiant unique. Cette carte pouvant ne pas avoir de valeur particulière, son utilisation n'est pas gênée par un quelconque frein psychologique.

Un autre avantage de l'invention est que, selon certains modes de réalisation, elle peut être déployée en utilisant la même infrastructure de lecteur pour ajouter un produit au panier virtuel et pour consulter ce panier sur une borne. De même, en cas de contrôle ou d'ouverture de porte, cette même infrastructure peut encore être utilisée.

## Revendications

1. Procédé pour conduire une transaction sur un ensemble de produits disponibles dans une surface géographique équipée d'une pluralité de lecteurs de communication en champ proche chacun associé à un produit, lesdits lecteurs de communication en champ proche étant connectés à un dispositif de traitement d' information (20) adapté pour mettre en œuvre l'interface avec une plateforme centralisée associée à ladite surface géographique, ledit procédé comportant :
- la lecture d'un badge radio par un desdits lecteurs de communication en champ proche afin de déterminer un identifiant contenu dans ledit badge et identifiant un client associé audit badge sur une durée supérieure à ladite transaction;
- le traitement, par le dispositif de traitement d' information (20), des informations reçues par ledit lecteur de communication en champ proche pour filtrer, afin de les écarter, les doubles lectures dues à une mauvaise manipulation du badge radio, sur la base d'un délai entre deux lectures du même badge par un même lecteur de communication en champ proche ;
- la transmission par ledit dispositif de traitement d'information (20) d'un message (50) contenant au moins un identifiant du produit associé audit lecteur de communication en champ proche et ledit identifiant dudit badge à ladite plateforme centralisée,
- la mémorisation d'un panier virtuel associant audit identifiant dudit badge, le ou les identifiants de produits contenus dans un ou plusieurs messages reçus dudit dispositif de traitement d'information (20), et
- la présentation du panier virtuel au moyen d'une interface homme-machine d'un terminal mobile de télécommunication (33)
- le paiement des produits identifiés dans ledit panier virtuel au moyen dudit terminal de télécommunication.

2. Système pour la conduite d'une transaction sur un ensemble de produits disponibles dans une surface géographique, comportant une pluralité de lecteurs de communication en champ proche (10₁, 10₂...10ᵢ, 10ᵢ₊₁, 10ᵢ₊₂...10ⱼ...10_{N}), connectés à un dispositif de traitement d 'information (20) adapté pour mettre en œuvre une interface avec ladite plateforme centralisée, dans lequel
- chacun desdits lecteurs de communication en champ proche est associé à un produit et adapté pour lire un badge radio (40) afin de déterminer un identifiant contenu dans ledit badge et identifiant un client associé audit badge sur une durée supérieure à ladite transaction,
- ledit dispositif de traitement d 'information (20) est adapté pour filtrer, afin de les écarter, les doubles lectures dues à une mauvaise manipulation du badge radio, sur la base d'un délai entre deux lectures du même badge par un même lecteur de communication en champ proche, et transmettre à ladite plateforme centralisée un message (50) contenant au moins un identifiant du produit associé audit lecteur de communication en champ proche et l'identifiant dudit badge;
- et ladite plateforme est associée à ladite surface géographique et adaptée pour recevoir ledit message et mémoriser un panier virtuel associant audit identifiant dudit badge un ou plusieurs identifiants de produits contenus dans un ou plusieurs messages reçus dudit dispositif de traitement d'information (20), et pour présenter ledit panier virtuel au moyen d'une interface homme-machine (32,33),
comportant en outre un terminal mobile de télécommunication (33) mettant en œuvre ladite interface homme-machine et des moyens adaptés pour effectuer le paiement des produits identifiés dans ledit panier virtuel.

3. Système selon la revendication 2, comportant en outre une borne (32) associée à ladite surface géographique mettant en œuvre ladite interface homme-machine, et un lecteur de communication en champ proche pour, lors d'une lecture dudit badge, déclencher la présentation dudit panier virtuel.

4. Système selon la revendication 3, dans lequel ladite borne comporte un terminal de paiement (34) adapté pour effectuer le paiement des produits identifiés dans ledit panier virtuel.

5. Système selon l'une des revendications 3 ou 4, dans lequel lesdits messages sont transmis via un réseau de radiocommunication.

6. Système selon l'une des revendications 3 à 5, dans lequel lesdits messages sont conformes au protocole MQTT.

7. Système selon l'une des revendications 3 à 5, dans lequel ladite plateforme est prévue pour constituer des statistiques à partir des informations obtenues par lesdits messages, représentatives du comportement dudit client.

## Patentansprüche

1. Verfahren zum Durchführen einer Transaktion mit einer Reihe von Produkten, die in einer geografischen Oberfläche erhältlich sind, die mit einer Vielzahl von Nahfeldkommunikationslesern ausgestattet ist, die jeweils einem Produkt zugeordnet sind, wobei die Nahfeldkommunikationsleser mit einer Informationsverarbeitungsvorrichtung (20) verbunden sind, die zum Implementieren der Schnittstelle mit einer zentralisierten Plattform angepasst ist, die der geografischen Oberfläche zugeordnet ist, das Verfahren umfassend:
- Auslesen eines Funkausweises durch einen der Nahfeldkommunikationsleser, um eine Kennung, die in dem Ausweis enthalten ist und einen Kunden identifiziert, der dem Ausweis für einen Zeitraum zugeordnet ist, der länger als die Transaktion ist, zu bestimmen;
- Verarbeiten, durch die Informationsverarbeitungsvorrichtung (20), der Informationen, die durch den Nahfeldkommunikationsleser empfangen werden, zum Filtern, um sie zu entfernen, nach Doppellesungen aufgrund einer falschen Handhabung des Funkausweises auf der Basis einer Verzögerung zwischen zwei Auslesungen desselben Ausweises durch einen gleichen Nahfeldkommunikationsleser;
- Übertragen, durch die Informationsverarbeitungsvorrichtung (20), einer Nachricht (50), die mindestens eine Kennung des Produkts, das dem Nahfeldkommunikationsleser zugeordnet ist, und die Kennung des Ausweises enthält, an die zentralisierte Plattform,
- Speichern eines virtuellen Warenkorbs, der der Kennung des Ausweises die Kennung(en) von Produkten zuordnet, die in einer oder mehreren Nachrichten enthalten sind, die von der Informationsverarbeitungsvorrichtung (20) empfangen werden, und
- Präsentieren des virtuellen Warenkorbs mittels einer Mensch-Maschine-Schnittstelle eines mobilen Telekommunikationsterminals (33)
- Bezahlen der Produkte, die in dem virtuellen Warenkorb identifiziert werden, mittels des Telekommunikationsterminals.

2. System zum Durchführen einer Transaktion mit einer Reihe von Produkten, die in einer geografischen Oberfläche erhältlich sind, umfassend eine Vielzahl von Nahfeldkommunikationslesern (10₁, 10₂...10ᵢ, 10ᵢ₊₁, 10ᵢ₊₂...10ⱼ...10_{N}), die mit einer Informationsverarbeitungsvorrichtung (20) verbunden sind, die zum Implementieren einer Schnittstelle mit der zentralisierten Plattform angepasst ist, wobei
- jeder der Nahfeldkommunikationsleser einem Produkt zugeordnet ist und zum Auslesen eines Funkausweises (40) angepasst ist, um eine Kennung, die in dem Ausweis enthalten ist und einen Kunden identifiziert, der dem Ausweis über einen Zeitraum zugeordnet ist, der größer als die Transaktion ist, zu bestimmen,
- die Informationsverarbeitungsvorrichtung (20) zum Filtern, um sie zu entfernen, nach Doppellesungen aufgrund einer falschen Handhabung des Funkausweises auf der Basis einer Verzögerung zwischen zwei Auslesungen des gleichen Ausweises durch den gleichen Nahfeldkommunikationsleser und zum Übertragen an die zentralisierte Plattform einer Nachricht (50) angepasst ist, die mindestens eine Kennung des Produkts, das dem Nahfeldkommunikationsleser zugeordnet ist, und die Kennung des Ausweises enthält;
- und die Plattform der geographischen Oberfläche zugeordnet ist und zum Empfangen der Nachricht und Speichern eines virtuellen Warenkorbs, der der Kennung des Ausweises eine oder mehrere Kennungen von Produkten zuordnet, die in einer oder mehreren Nachrichten enthalten sind, die von der Informationsverarbeitungsvorrichtung (20) empfangen werden, und zum Präsentieren des virtuellen Warenkorbs mittels einer Mensch-Maschine-Schnittstelle (32, 33) angepasst ist,
ferner umfassend ein mobiles Telekommunikationsterminal (33), das die Mensch-Maschine-Schnittstelle implementiert, und Mittel, die zum Vornehmen der Zahlung für die Produkte angepasst ist, die in dem virtuellen Warenkorb identifiziert werden.

3. System nach Anspruch 2, ferner umfassend ein Endgerät (32), das der geographischen Oberfläche zugeordnet ist, das die Mensch-Maschine-Schnittstelle implementiert, und einen Nahfeldkommunikationsleser zum Auslösen, bei einer Auslesung des Ausweises, der Präsentation des virtuellen Warenkorbs.

4. System nach Anspruch 3, wobei das Endgerät ein Zahlungsterminal (34) umfasst, das zum Vornehmen der Zahlung für die Produkte angepasst ist, die in dem virtuellen Warenkorb identifiziert werden.

5. System nach einem der Ansprüche 3 oder 4, wobei die Nachrichten über ein Funkkommunikationsnetzwerk übertragen werden.

6. System nach einem der Ansprüche 3 bis 5, wobei die Nachrichten dem MQTT-Protokoll entsprechen.

7. System nach einem der Ansprüche 3 bis 5, wobei die Plattform zum Erstellen von Statistiken aus den Informationen vorgesehen ist, die durch die Nachrichten erhalten werden, die das Verhalten des Kunden darstellen.

## Claims

1. Method for conducting a transaction on a set of products available in a geographical area equipped with a plurality of near-field communication readers each associated with a product, the near-field communication readers being connected to an information processing device (20) suitable for implementing the interface with a centralized platform associated with the geographical area, the method comprising:
- reading a radio badge by one of the near-field communication readers in order to determine an identifier contained in the badge and identifying a customer associated with the badge over a period longer than the transaction;
- processing, by the information processing device (20), the information received by the near-field communication reader to filter out double readings due to improper handling of the radio badge, on the basis of a delay between two readings of the same badge by the same near-field communication reader;
- transmitting, by the information processing device (20), a message (50) containing at least one identifier of the product associated with the near-field communication reader and the identifier of the badge to the centralized platform,
- storing a virtual basket associating with the badge identifier, the product identifier(s) contained in one or more messages received from the information processing device (20), and
- displaying the virtual basket via a human-machine interface on a mobile telecommunication terminal (33)
- paying for the products identified in the virtual basket by means of the telecommunication terminal.

2. System for conducting a transaction on a set of products available in a geographical area, comprising a plurality of near-field communication readers (10₁, 10₂...10ᵢ, 10ᵢ₊₁, 10ᵢ₂...10ⱼ... 10_{N}), connected to an information processing device (20) suitable for implementing an interface with the centralized platform, wherein
- each of the near-field communication readers is associated with a product and suitable for reading a radio badge (40) in order to determine an identifier contained in the badge and identifying a customer associated with the badge over a period longer than the transaction,
- the information processing device (20) is suitable for filtering out double readings due to improper handling of the radio badge, on the basis of a delay between two readings of the same badge by the same near-field communication reader, and to transmit to the centralized platform a message (50) containing at least one identifier of the product associated with the near-field communication reader and the identifier of the badge;
- and the platform is associated with the geographical area and suitable for receiving the message and storing a virtual basket associating with the identifier of the badge one or more identifiers of products contained in one or more messages received from the information processing device (20), and for displaying the virtual basket by means of a human-machine interface (32, 33),
further comprising a mobile telecommunication terminal (33) implementing the human-machine interface and means suitable for making payment for the products identified in the virtual basket.

3. System according to claim 2, further comprising a terminal (32) associated with the geographical surface implementing the human-machine interface, and a near-field communication reader for, upon reading the badge, triggering the display of the virtual basket.

4. System according to claim 3, wherein the terminal comprises a payment terminal (34) suitable for making payment for the products identified in the virtual basket.

5. System according to any of claims 3 or 4, wherein the messages are transmitted via a radio communication network.

6. System according to any of claims 3 to 5, wherein the messages comply with the MQTT protocol.

7. System according to any of claims 3 to 5, wherein the platform is provided to form statistics from the information obtained by the messages, representative of the customer's behavior.
